# EUROPEAN PATENT APPLICATION

(11) **EP 4 726 848 A1**
(43) Date of publication of application: **15.04.2026**
(21) Application number: 24928704.6
(22) Date of filing: 06.12.2024
(51) Int. Cl.: H01M 10/42, H01M 50/46, H01M 4/62, H01M 50/417, H01M 10/52

(54) **UNIT CELL AND METHOD FOR MANUFACTURING SAME**

(30) Priority: 06.03.2024 KR 20240031821
(71) Applicant: LG Energy Solution, Ltd., Seoul 07335 (KR)
(72) Inventor: LEE, Eun Ju, Daejeon 34122 (KR); KYUNG, Wonshik, Daejeon 34122 (KR); KIM, Won Nyeon, Daejeon 34122 (KR); KIM, Seongsoo, Daejeon 34122 (KR)
(74) Representative: Plasseraud IP
(86) International application number: PCT/KR2024/019906
(87) International publication number: WO 2025/187906

(57) **Abstract**

The present invention relates to a unit cell and a method for manufacturing same. The objective of the present invention is to provide a unit cell and a method for manufacturing same, which can prevent folding and lifting of electrodes or separators during the manufacturing of a unit cell and a battery using the unit cell as a component, and can also prevent lifting of electrodes and separators during the use of the battery.

## Description

### Technical Field

The present disclosure relates to a unit cell and a method of manufacturing same, and more particularly, to a unit cell and a method of manufacturing the same, which may prevent folding and lifting of an electrode or a separator during manufacturing of a unit cell and manufacturing of a battery including the unit cell as a component, and which may also prevent lifting of the electrode and separator during use of the battery.

### Background Art

In general, secondary batteries are batteries that can be used repeatedly through a discharging process that converts chemical energy into electrical energy and a charging process that converts electrical energy into chemical energy, and their types include nickel-cadmium (Ni-Cd) batteries, nickel-metal hydride (Ni-MH) batteries, lithium-metal batteries, lithium-ion (Li-ion) batteries, and lithium-ion polymer batteries. Among these secondary batteries, lithium secondary batteries have been commercialized and are widely used due to their high energy density and voltage, long cycle life, and low self-discharge rate.

As a process of intercalation and deintercalation of lithium ions from lithium metal oxide of a cathode to an anode is repeated, charging and discharging of the lithium secondary battery proceeds.

A secondary battery may generally be manufactured by accommodating an electrode assembly in which a cathode, a separator, and an anode are stacked and assembled together with an electrolyte in a case such as a cylindrical can or a square pouch.

Specifically, a unit cell is manufactured by cutting and stacking the cathode, the separator, and the anode in a pre-designed manner. A predetermined quantity of the manufactured unit cells may be manufactured as an electrode assembly by stacking, folding, or rolling.

In the process of manufacturing a unit cell or stacking, folding, or rolling the unit cell, the electrode may fold or the separator may be lifted from the electrode, which may cause phenomena such as lithium ion precipitation in the future, which may lead to degradation of the lifespan and performance of the battery.

In addition, various types of gases such as hydrogen, oxygen, nitrogen, carbon monoxide, carbon dioxide, hydrocarbons such as CₙH₂ₙ₋₂ (n=2~5), CₙH₂ₙ (n=2~5), and CₙH₂ₙ₊₂ (n=1~5), and other organic gas species, may be generated inside a lithium secondary battery depending on the reaction. Specifically, gases may be generated from electrolytes, active materials, additives, etc., during the charging and discharging process of the secondary battery, and the contact between the separator and the electrode may be reduced due to the gas generated between the separator and the electrode.

To solve these problems, a method of bonding the electrode and the separator using an adhesive composition is being considered, but there is a concern that the movement of the electrolyte and lithium ions may be hindered in a region to which the adhesive is applied when the battery is operated, and additional gases may be generated due to the adhesive.

### Disclosure of the Invention

### Technical Goals

The present disclosure relates to a unit cell and a method of manufacturing the same, and to provide a unit cell and a method of manufacturing the same, which may prevent folding and lifting of an electrode or a separator without an adhesive composition during manufacturing of a unit cell and manufacturing of a battery using the unit cell as a component, and may prevent lifting of the electrode and separator during use of the battery.

Technical objects to be achieved by the present disclosure are not limited to the technical objects mentioned above, and other technical objects that are not mentioned will be clearly understood by those skilled in the art from the description below.

### Technical Solutions

A unit cell according to the present disclosure includes,
a cathode;
a first separator stacked on one surface of the cathode;
an anode stacked on an upper surface of the first separator; and
a second separator stacked on an upper surface of the anode,
wherein an area of each of the first separator and the second separator is greater than an area of each of the anode and the cathode, so that each of the first separator and the second separator includes an edge region not in contact with the anode and the cathode, and
the first separator and the second separator are bonded together at the edge regions.

According to one aspect, the cathode may include a cathode binder, the anode may include an anode binder, the cathode binder may include a polyvinylidene fluoride (PVdF)-based binder, the anode binder may include one or more of a styrene-butadiene rubber (SBR)-based binder and carboxymethyl cellulose (CMC), and materials of the first separator and the second separator may include one or more of polyethylene (PE) and polypropylene (PP).

According to one aspect, the cathode may include a first cathode composite layer including a cathode active material, a conductive material and the cathode binder, a cathode current collector stacked on an upper surface of the first cathode composite layer, and a second cathode composite layer stacked on an upper surface of the cathode current collector and including the cathode active material, the conductive material, and the cathode binder, and the second cathode composite layer may be bonded to the first separator by the cathode binder.

According to one aspect, the edge region that does not face the anode among regions where the first separator and the second separator face each other may be a bonding target region, the bonding target region may include a bonding region where the first separator and the second separator are bonded together and a non-bonding region where the first separator and the second separator are not bonded together, and an area of the bonding region may have an area ratio of 0.5 to 0.9 compared to an area of the bonding target region.

According to one aspect, the non-bonding region may have an area ratio of 0.1 to 0.5 compared to the area of the bonding target region, and may form a flow path region that allows gas generated from the anode to be discharged or an electrolyte to be introduced into the anode.

According to one aspect, each of the anode, the first separator, and the second separator may have a rectangular shape extending in a first direction and a second direction perpendicular to the first direction.

According to one aspect, each of the anode, the first separator, and the second separator may have a length in the first direction that is longer than a length in the second direction, the bonding target region may be formed on both sides centered on the anode with respect to the second direction, and a length of the bonding target region in the second direction from one end part of the anode may be 1% to 70% of the length of the anode in the second direction.

According to one aspect, a length of the flow path region in the second direction may be from one end part of the anode on the second direction to an edge of the first separator or an edge of the second separator.

According to one aspect, the flow path region may be divided into a plurality of sub-regions, and each of the plurality of sub-regions may be spaced apart from each other at a predetermined interval in the first direction.

A method of manufacturing a unit cell of the present disclosure may include the steps of:
(S1) preparing a cathode;
(S2) stacking a first separator on one surface of the cathode;
(S3) stacking an anode on an upper surface of the first separator;
(S4) stacking a second separator on an upper surface of the anode; and
(S5) bonding the cathode, the anode, the first separator, and the second separator, which are stacked, by applying heat and pressure, wherein an area of each of the first separator and the second separator is greater than an area of each of the anode and the cathode, so that each of the first separator and the second separator includes an edge region not in contact with the anode and the cathode, to bond the edge regions of the first separator and the second separator together.

According to one aspect, in the step S5, edge regions of the first separator and the second separator may be bonding target regions, which are regions that do not face the anode among regions where the first separator and the second separator face each other, the bonding target region may include a bonding region where the first separator and the second separator are bonded and a non-bonding region where the first separator and the second separator are not bonded, and the non-bonding region may form a flow path region that allows gas generated from the anode to be discharged or an electrolyte to be introduced into the anode.

According to one aspect, in the step S5, the flow path region may be in contact with a heat-blocking means.

According to one aspect, in the step S5, the bonding region may be in contact with a heating means.

### Advantageous Effects

A unit cell and a method of manufacturing the same of the present disclosure may prevent folding and lifting of an electrode or a separator during manufacturing of a unit cell and manufacturing of a battery using the unit cell as a component, and may also prevent lifting of the electrode and separator during use of the battery.

The unit cell and the method of manufacturing the same of the present disclosure may prevent degradation of the lifespan and performance of the battery by preventing the electrode from folding or the separator and electrode from lifting during the process of manufacturing the unit cell or the process of stacking, folding, or rolling the unit cell.

The unit cell according to the present disclosure may easily discharge gas generated between the separator and the electrode, thereby preventing degradation in the contact between the separator and the electrode.

The unit cell according to the present disclosure has the cathode bonded to the first separator by the binder contained in the cathode composite layer without a separate adhesive composition, and the anode physically fixed between the first separator and the second separator, thereby preventing gas generation and battery performance degradation caused by the use of adhesive compositions.

### Brief Description of Drawings

FIG. 1 is an exploded perspective view illustrating a unit cell according to an embodiment.
FIG. 2 is a cross-sectional view illustrating a stacked structure of a unit cell.
FIG. 3 is a schematic diagram illustrating a bonding target region of a unit cell according to an embodiment.

### Best Mode for Carrying Out the Invention

Hereinafter, embodiments according to the present disclosure will be described in detail with reference to the accompanying drawings. In this process, the size or shape of the components shown in the drawings may be exaggerated for clarity and convenience of explanation. In addition, terms specifically defined in consideration of the configuration and operation of the present disclosure may vary according to the intentions or customs of users and operators. Definitions of these terms should be made based on the content throughout this specification.

In the description of the present disclosure, it should be noted that an orientation or positional relationship indicated by the terms such as "center", "upper", "lower", "left", "right", "vertical", "horizontal", "inner side", "outer side", "one side", and "other side" is based on an orientation or positional relationship shown in a drawing or an orientation or positional relationship that is placed when using the product of the present disclosure on a daily basis, and is merely for explanation and brief description of the present disclosure, and it does not suggest or imply that the displayed device or element must necessarily be configured or operated in a specified orientation and should not be construed as limiting the present disclosure.

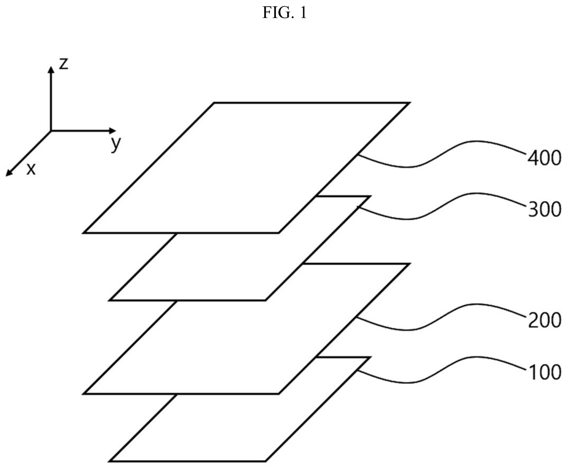

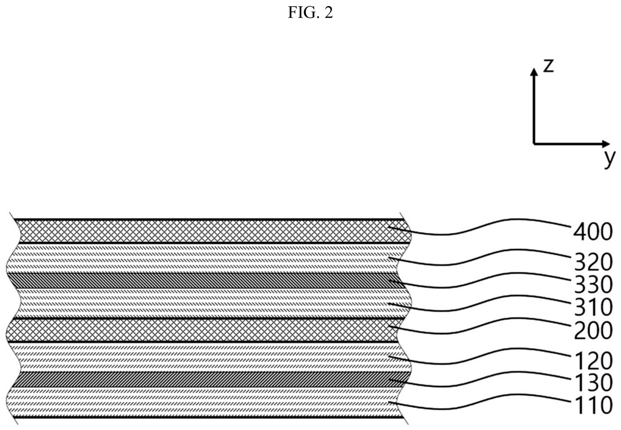

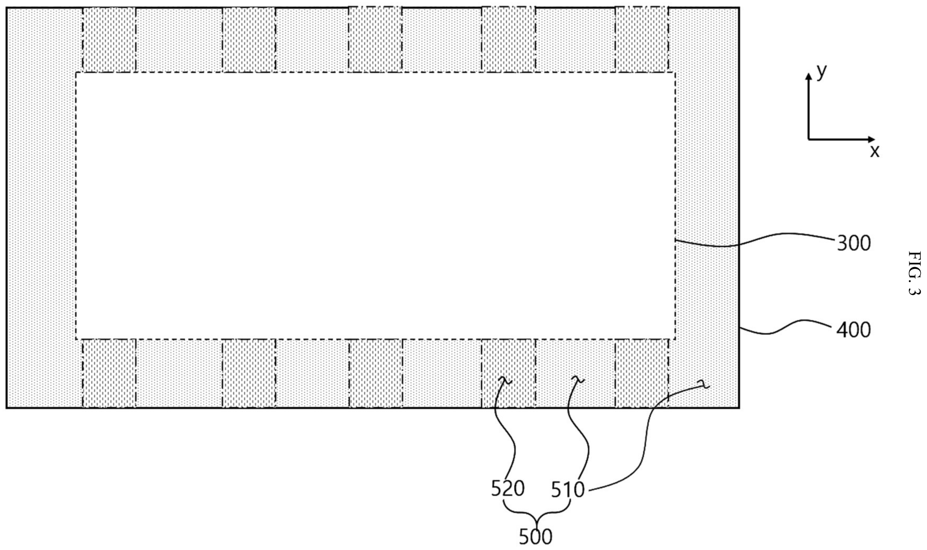

FIG. 1 is an exploded perspective view schematically illustrating a structure of a unit cell according to an embodiment of the present disclosure. FIG. 2 is a cross-sectional view illustrating a stacked structure of a unit cell. FIG. 3 is a schematic diagram illustrating a bonding target region of a unit cell.

Hereinafter, with reference to FIGS. 1 to 3, a unit cell of the present disclosure will be described. In the following description, the x-axis direction illustrated in FIGS. 1 to 3 is a first direction, the y-axis direction is a second direction, and the z-axis direction is a vertical direction.

The unit cell may be a minimum unit cell including one cathode 100 and one anode 300. In other words, the unit cell may be a mono cell. More specifically, the unit cell may include two separators 200 and 400, one cathode 100, and one anode 300.

The unit cell of the present disclosure may be folded or rolled, or a plurality of the unit cells may be stacked to be processed into an electrode assembly for use. The unit cell of the present disclosure may be used in a square battery, a cylindrical battery, a pouch-type battery, etc. It may be preferably used in a pouch-type battery.

As illustrated in FIG. 1, the unit cell may include:
a cathode 100;
a first separator 200 stacked on an upper surface of the cathode 100;
an anode 300 stacked on an upper surface of the first separator 200; and
a second separator 400 stacked on an upper surface of the anode 300,

The area of each of the first separator 200 and the second separator 400 is greater than the area of each of the anode 300 and the cathode 100, so that each of the first separator 200 and the second separator 400 includes an edge region (shaded part) not in contact with the anode 300 and the cathode 100, and the separators 200 and 400 may be bonded to each other by the edge regions of the first separator 200 and the second separator 400. Specifically, the cathode 100 may be bonded to the first separator 200, and the anode 300 may be fixed by being sandwiched between the first separator 200 and the second separator 400.

The cathode 100 may include a cathode binder, the anode 300 may include an anode binder, the cathode binder may include a polyvinylidene fluoride (PVdF)-based binder, and the anode binder may include at least one of a styrene butadiene rubber (SBR)-based binder and carboxymethyl cellulose (CMC). At this time, the materials of the first separator 200 and the second separator 400 may include one or more of polyethylene (PE) and polypropylene (PP). Therefore, the cathode 100 may be bonded to the first separator 200 by appropriate heat and pressure without a separate adhesive due to the cathode binder material.

In addition, the anode 300 is sandwiched between the first separator 200 and the second separator 400, and the edges of the first separator 200 and the second separator 400 are bonded by appropriate heat and pressure, so that they may be fixed without a separate adhesive.

As described above, the unit cell may prevent folding, lifting, etc., by bonding and fixing the cathode 100, the anode 300, the first separator 200, and the second separator 400 to each other. In addition, the unit cell may be stably maintained in an unfolded state even during processes such as moving, rolling, folding, etc.

FIG. 2 illustrates a stacked structure of a unit cell according to an embodiment in more detail. As illustrated in FIG. 2, the cathode 100 may include a first cathode composite layer 110 including a cathode active material, a conductive material, and the cathode binder, a cathode current collector 130 stacked on an upper surface of the cathode composite layer 110, and a second cathode composite layer 120 stacked on an upper surface of the cathode current collector 130 and including the cathode active material, the conductive material, and the cathode binder. Here, the second cathode composite layer 120 may be bonded to the first separator 200 by the cathode binder without a separate adhesive.

As illustrated in FIG. 2, the anode 300 may include a first anode composite layer 310 including an anode active material, a conductive material, and the anode binder, a anode current collector 330 stacked on an upper surface of the first anode composite layer 310, and a second anode composite layer 320 stacked on an upper surface of the anode current collector 330 and including the anode active material, the conductive material, and the anode binder. The first anode composite layer 310 may face the first separator 200, and the second anode composite layer 320 may face the second separator 400.

The cathode active material may be LCO (lithium cobalt oxide), LMO (lithium manganese oxide), NCM (nickel cobalt manganese), NCA (nickel cobalt aluminum), LFP (lithium iron phosphate), etc.

The anode active material may be a graphite-based material, a silicon-based material, or the like.

The conductive material is not particularly limited as long as it is used as a conductive material in the technical field to which the present disclosure belongs, and includes, for example, a carbon-based conductive material and a metal-based conductive material, and a specific example is one or more selected from the group consisting of graphite such as natural graphite, artificial graphite, graphene, or the like; carbon black such as acetylene black, Ketjen black, channel black, Paneth black, lamp black, thermal black, or the like; conductive fibers such as carbon fibers, metal fibers, or the like; conductive tubes such as carbon nanotubes or the like; fluorocarbons; conductive metal powders such as aluminum powder, nickel powder, or the like; conductive whiskers such as zinc oxide whiskers, potassium titanate whiskers, or the like; conductive metal oxides such as titanium oxide or the like; and conductive organic compounds such as polyphenylene derivatives or the like, and preferably, the conductive material may be a carbon-based conductive material.

The cathode binder may be a polyvinylidene fluoride (PVdF)-based binder. A specific example of the PVdF binder is one or more selected from the group consisting of polyvinylidene fluoride (PVdF), poly(vinylidene fluoride-co-hexafluoropropylene) (PVdF-HFP), polyvinylidene fluoride-co-trichloroethylene (PVdF-TCE), poly(vinylidene fluoride-co-chlorotrifluoroethylene) (PVdF-CTFE), poly(vinylidene fluoride-co-tetrafluoroethylene) (PVdF-TFE), and poly(vinylidene fluoride-co-trifluoroethylene (PVdF-TrFE).

In order to enable the cathode and the separator to be bonded by heat and pressure without an adhesive, the cathode binder is preferably fused at 70°C or higher or 80°C or higher under a predetermined pressure, and in order to prevent degradation of the secondary battery life performance, it is preferable not to melt at a temperature below that.

The anode binder may be a styrene-butadiene rubber (SBR)-based binder or carboxymethyl cellulose (CMC).

The SBR-based binder may be, for example, one or more selected from the group consisting of styrene-butadiene rubber (SBR) and acrylated styrene-butadiene rubber.

FIG. 3 is a schematic diagram illustrating a bonding target region of a unit cell according to an embodiment. As illustrated in FIG. 3, a region (the entire shaded part) that does not face the anode 300 among regions where the first separator (not shown) and the second separator 400 face each other is a bonding target region 500. The bonding target region 500 may include a bonding region 510 where the first separator (not shown) and the second separator are bonded to each other and a flow path region 520 where they are not bonded to each other. The area ratio of the entire bonding region 510 to the entire area of the bonding target region 500 may be 0.5 to 0.9, and the area ratio of the entire flow path region 520 may be 0.1 to 0.5. Preferably, the area ratio of the entire flow path region 520 to the entire area of the bonding target region 500 may be 0.15 or more, 0.2 or more, or 0.25 or more, and 0.45 or less, 0.4 or less, or 0.35 or less, and more preferably 0.28 to 0.32, or about 0.3. The flow path region 520 allows gas generated from the anode 300 to be discharged or allows the anode 300 to be impregnated more quickly during electrolyte impregnation.

Specifically, when the completed secondary battery is charged or discharged, gas generated from the anode active material or the anode 300 portion is discharged through the flow path region 520, and the phenomenon of the first separator 200 or the second separator 400 being lifted off from the anode 300 may be prevented.

In addition, during the secondary battery manufacturing process, in the process of accommodating the electrode assembly in the battery case and then injecting the electrolyte into the battery case, the electrolyte may be introduced into the anode 300 more quickly through the flow path region 520, so that the anode active material may be impregnated more quickly.

According to a preferred embodiment, each of the anode 300, the first separator 200, and the second separator 400 may be provided in a rectangular shape having the first direction (x) and the second direction (y) as sides. As a more specific example, the anode 300 may be provided in a rectangular shape whose length in the first direction (x) is longer than its length in the second direction (y). At this time, a lead tab (not shown) for electrical connection with the outside may be connected to the side of the anode 300 extending in the second direction. A flow path region 520 may not be provided in the bonding target region that contacts the side of the anode 300 extending in the second direction among the bonding target regions 500. Since a lead tab may be formed in the corresponding region, gas may be discharged through the lead tab, and formation of an additional flow path region 520 together with the lead tab may be structurally unstable.

The bonding target region 500 may include regions formed on both sides centered on the anode 300 with respect to the second direction, and the length (width) of the bonding target region 500 in the second direction from one end part of the anode 300 may be 1% to 70%, for example, 2% or more, 3% or more, 4% or more, 5% or more, and 65% or less, 60% or less, 55% or less, 50% or less, 45% or less, 40% or less, 35% or less, or 30% or less, of the length (width) of the cathode 300 in the second direction. The length may be determined in consideration of physical properties such as rigidity or the like of the first separator 200 and the second separator 400. Preferably, the length (width) of the bonding target region 500 in the second direction from one end part of the anode 300 may be formed as 3% to 50% of the length (width) of the anode 300 in the second direction. More preferably, the length (width) of the bonding target region 500 in the second direction from one end part of the anode 300 may be formed as 5% to 30% of the length (width) of the anode 300 in the second direction. For example, the length (width) of the bonding target region 500 in the second direction from one end part of the anode 300 may be 40 µm to 100 µm.

The length of the flow path region 520 in the second direction may extend from one end part of the anode 300 in the second direction to the edge of the first separator 200 or the edge of the second separator 400.

There may be one flow path region 520, but as shown in FIG. 3, the flow path region 520 at the end part of the anode 300 on the second direction may be divided into a plurality of sub-regions, and the plurality of sub-regions may be spaced apart from each other at a predetermined interval in the first direction. The spacing interval may or may not be constant. The length of each of the plurality of sub-regions in the first direction may be the same or different. In other words, the flow path region 520 may be divided into a plurality of sub-regions, and each of the plurality of sub-regions may be spaced apart from each other at a predetermined interval in the first direction, and each of the plurality of sub-regions may have, on the second direction, one end part connected to the anode 300 and the other end part touching the edge of the first separator 200 or the second separator 400. Accordingly, the gas generated in the anode 300 may be discharged outside the region surrounded by the first separator 200 and the second separator 400 through the flow path region 520.

When the unit cell of the present disclosure is used in the manufacture of a jellyroll type electrode, the length of and the spacing interval between the bonding regions 510 and the flow path regions 520 may be appropriately changed in consideration of the larger curvature of the center part.

The unit cell manufacturing method of manufacturing a unit cell of the present disclosure may include the steps of:
(S1) preparing a cathode 100;
(S2) stacking a first separator 200 on one surface of the cathode 100;
(S3) stacking an anode 300 on an upper surface of the first separator 200;
(S4) stacking a second separator 400 on an upper surface of the anode 300; and
(S5) bonding the cathode 100, the anode 300, the first separator 200, and the second separator 400, which are stacked, by applying heat and pressure, wherein an area of each of the first separator 200 and the second separator 400 is greater than an area of each of the cathode 100 and the anode 300, so that each of the first separator and the second separator includes an edge region not in contact with the anode and the cathode, to bond the edge regions of the first separator 200 and the second separator 400 to each other.

According to a preferred embodiment, in the step S5, the edges of the first separator 200 and the second separator 400, which are regions that do not face the anode 300 among regions where the first separator 200 and the second separator 400 face each other, may be bonding target regions 500, the bonding target region 500 may include a bonding region 510 where the first separator 200 and the second separator 400 are bonded and a non-bonding region where they are not bonded, and the non-bonding region may form a flow path region 520 that allows gas generated from the anode 300 to be discharged or an electrolyte to be introduced into the anode 300.

Specifically, in the step S5, a heat-blocking means may be in contact with the flow path region 520, and a heating means may be in contact with the bonding region 510.

The heat-blocking means may be a block of insulating material, or a cooling jig equipped with a heat dissipation means capable of quickly discharging heat to the outside. When the cathode, the first separator, the anode, and the second separator are stacked under heating and pressure, a flow path region may be secured by using such a heat-blocking means.

The heating means may be a heating jig equipped with an IR heater, or the like. In order to allow the first separator and the cathode, or the first separator and the second separator to be bonded to each other only by heat and pressure without an adhesive, it is preferable to apply a predetermined pressure. It is preferable that the heating temperature of the heating jig be controlled to 60 to 200°C.

Although embodiments according to the present disclosure have been described above, they are merely illustrative, and those skilled in the art will understand that various modifications and embodiments of an equivalent scope are possible therefrom. Therefore, the true technical protection scope of the present disclosure should be determined by the appended claims.

### <Explanation of Symbols>

100...Cathode 110...First cathode composite layer 120...Second cathode composite layer 130...Cathode current collector 200...First separator 300...Anode 310...First anode composite layer 320...Second anode composite layer 330...Anode current collector 400...Second separator 500...Bonding target region 510...Bonding region 520...Flow path region

## Claims

1. A unit cell comprising:
a cathode;
a first separator stacked on one surface of the cathode;
an anode stacked on an upper surface of the first separator; and
a second separator stacked on an upper surface of the anode,
wherein an area of each of the first separator and the second separator is greater than an area of each of the anode and the cathode, so that each of the first separator and the second separator includes an edge region not in contact with the anode and the cathode, and
the first separator and the second separator are bonded together at the edge regions.

2. The unit cell of claim 1, wherein the cathode comprises a cathode binder,
the anode comprises an anode binder,
the cathode binder comprises a polyvinylidene fluoride (PVdF)-based binder,
the anode binder comprises one or more of a styrene-butadiene rubber (SBR)-based binder and carboxymethyl cellulose (CMC), and
materials of the first separator and the second separator comprise one or more of polyethylene (PE) and polypropylene (PP).

3. The unit cell of claim 2, wherein the cathode comprises:
a first cathode composite layer comprising a cathode active material, a conductive material, and the cathode binder;
a cathode current collector stacked on an upper surface of the first cathode composite layer; and
a second cathode composite layer stacked on an upper surface of the cathode current collector and comprising the cathode active material, the conductive material, and the cathode binder, and
the second cathode composite layer is bonded to the first separator by the cathode binder.

4. The unit cell of claim 1, wherein the edge region that does not face the anode among regions where the first separator and the second separator face each other is a bonding target region, and the bonding target region comprises a bonding region where the first separator and the second separator are bonded together and a non-bonding region where the first separator and the second separator are not bonded together, and
an area of the bonding region has an area ratio of 0.5 to 0.9 compared to an area of the bonding target region.

5. The unit cell of claim 4, wherein the non-bonding region has an area ratio of 0.1 to 0.5 compared to the area of the bonding target region, and forms a flow path region that allows gas generated from the anode to be discharged or an electrolyte to be introduced into the anode.

6. The unit cell of claim 5, wherein each of the anode, the first separator, and the second separator has a rectangular shape extending in a first direction and a second direction perpendicular to the first direction.

7. The unit cell of claim 6, wherein each of the anode, the first separator, and the second separator have a length in the first direction that is longer than a length in the second direction,
the bonding target region is formed on both sides centered on the anode with respect to the second direction, and
a length of the bonding target region in the second direction from one end part of the anode is 1% to 70% of the length of the anode in the second direction.

8. The unit cell of claim 6, wherein a length of the flow path region in the second direction is from one end part of the anode on the second direction to an edge of the first separator or an edge of the second separator.

9. The unit cell of claim 8, wherein the flow path region is divided into a plurality of sub-regions, and
the plurality of sub-regions is spaced apart from each other at a predetermined interval in the first direction.

10. A method of manufacturing a unit cell, the method comprising the steps of:
(S1) preparing a cathode;
(S2) stacking a first separator on one surface of the cathode;
(S3) stacking an anode on an upper surface of the first separator;
(S4) stacking a second separator on an upper surface of the anode; and
(S5) bonding the cathode, the anode, the first separator, and the second separator, which are stacked, by applying heat and pressure, wherein an area of each of the first separator and the second separator is greater than an area of each of the anode and the cathode, so that each of the first separator and the second separator includes an edge region not in contact with the anode and the cathode, to bond the edge regions of the first separator and the second separator together.

11. The method of claim 10, wherein, in the step S5, edge regions of the first separator and the second separator are bonding target regions, which are regions that do not face the anode among regions where the first separator and the second separator face each other, and
the bonding target region comprises a bonding region where the first separator and the second separator are bonded and a non-bonding region where the first separator and the second separator are not bonded, and the non-bonding region forms a flow path region that allows gas generated from the anode to be discharged or an electrolyte to be introduced into the anode.

12. The method of claim 11, wherein, in the step S5,
the flow path region is in contact with a heat-blocking means.

13. The method of claim 11, wherein, in the step S5, the bonding region is in contact with a heating means.

14. A secondary battery comprising the unit cell of claim 1.
